# EUROPEAN PATENT APPLICATION

(11) **EP 4 607 503 A1**
(43) Date of publication of application: **27.08.2025**
(21) Application number: 23906364.7
(22) Date of filing: 24.08.2023
(51) Int. Cl.: G10K 11/168, C08G 18/00

(54) **SOUND-PROOFING MATERIAL AND METHOD FOR PRODUCING SAME**

(30) Priority: 23.12.2022 JP 2022207558
(71) Applicant: Inoac Corporation, Nagoya-shi, Aichi 450-0003 (JP)
(72) Inventor: SAKAKIBARA, Hirokazu, Anjo-shi, Aichi 446-8504 (JP)
(74) Representative: Kramer Barske Schmidtchen Patentanwälte PartG mbB
(86) International application number: PCT/JP2023/030427
(87) International publication number: WO 2024/134985

(57) **Abstract**

[Summary]

A sound-proofing material is composed of a polyurethane foam. The sound-proofing material includes a double wall structure region composed of a first skin layer/a core layer/a second skin layer in at least a portion thereof. A density ratio of a first skin layer region A is 1.05 or more, and a density ratio of a second skin layer region A is 1.05 or more. Furthermore, the sound-proofing material has an overall (OA) density of 130 kg/m³ or less. Such a sound-proofing material is obtained by preparing a raw material mixture containing a relatively large amount of low molecular weight polyol, applying a mold release agent containing a wax component having two melting peaks and a branched chain structure to an inner surface of a mold, and foaming and curing the raw material mixture in the mold.

## Description

### FIELD OF THE INVENTION

The present invention relates to a sound-proofing material and a method for producing the same, and more particularly to a sound-proofing material which is composed of a polyurethane foam, is excellent in sound absorbing properties and sound insulating properties, and has a low density, and a method for producing the same.

### BACKGROUND OF THE INVENTION

Polyurethane refers to a polymer compound having a urethane bond (-NH-C(O)O-). The polyurethane is generally obtained by reacting a hydroxyl group (-OH) of a polyol with an isocyanate group (-NCO) of a polyisocyanate. The polyurethane is known to exhibit diverse properties by optimizing the type(s) of polyol and/or polyisocyanate. Therefore, the polyurethane is applied to various automobile components, synthetic leather, paints, adhesives, and the like. Further, a polyurethane foam obtained by foaming a polyurethane is applied to a heat insulating material, a cushioning material, and the like.

Polyurethane foams are roughly categorized into:
(a) a soft polyurethane foam having cells communicating with each other,
(b) a rigid polyurethane foam having independent cells, and
(c) a semi-rigid polyurethane foam having properties intermediate between the rigid and soft polyurethane foams.

Among them, the soft polyurethane foam is known to exhibit sound absorbing properties. When a sound is incident on the soft polyurethane foam, the sound enters the communicating cells, and is reflected in various directions in the communicating cells. At this time, viscous friction of air occurs at inner surfaces of the communicating cells. As a result, a part of energy of the sound is changed to thermal energy due to the friction, leading to sound attenuation. Therefore, the soft polyurethane foam is used, for example, as a sound-proofing material disposed in a gap (for example, in a gap around a fender, an instrument panel, or a cowl) serving as a sound propagation path in an automobile.

Various proposals have been heretofore made on such a sound-proofing material.

For example, Patent Literatures 1 and 2 disclose a sound insulating material obtained by reacting a raw material containing:
(a) a polyether polyol having 3 functional groups and a molecular weight of 5000: 90 parts by mass,
(b) a polymer polyol having 3 functional groups and a molecular weight of 5000: 10 parts by mass,
(c) a diethanolamine (crosslinking agent): 1 part by mass,
(d) an amine catalyst: 0.95 parts by mass,
(e) water (foaming agent): 1.3 parts by mass,
(f) a silicone foam stabilizer: 0.17 parts by mass, and
(g) modified 4,4'-diphenylmenthane diisocyanate: 41.7 parts by mass (corresponding to isocyanate index = 100).

These literatures disclose that a sound insulating material in which
(A) a covering layer is provided on a surface thereof,
(B) a coefficient of dynamic friction of a surface of the covering layer is 0.762,
(C) a surface hardness of the covering layer is 2 as measured by an Asker C hardness meter,
(D) an air permeability of the surface is 7 L/min,
(E) an air permeability of the inside is 23 L/min, and
(F) a density is 135 kg/m³
is obtained by such a method.

Patent Literature 3 discloses a sound-proofing material obtained by reacting a raw material containing:
(a) a polyol having 4 or 5 functional groups and an average molecular weight of 500 to 600,
(b) a polyol having 2 or 3 functional groups and an average molecular weight of 3000 to 4000,
(c) an MDI-based isocyanate,
(d) a tertiary amine (catalyst), and
(e) water (foaming agent).

This literature discloses that a sound-proofing material in which
(A) a Young's modulus is 1.6 × 10⁵ N/m²,
(B) a density is 104 kg/m³, and
(C) a ventilation resistance is 3000 Ns/m³
is obtained by such a method.

The sound-proofing material is required not only to have high sound absorbing properties but also to have high sound insulating properties (large transmission loss). In order to increase the transmission loss, it is necessary to increase the density of the sound-proofing material and to increase the thickness of the sound-proofing material. In a sound-proofing material made of a polyurethane foam, a skin layer having a high density is provided on a surface thereof to impart sound insulating properties. However, a conventional sound-proofing material made of a polyurethane foam does not have sufficient sound insulating properties.

On the other hand, when the density of the skin layer is further increased or the thickness of the skin layer is increased in order to increase the sound insulating properties, the weight of the sound-proofing material increases, which goes against the need for weight reduction.

When a mold release agent is applied to a surface of a mold in molding a polyurethane foam, a stronger skin layer can be formed on a surface of a molded article. However, if the type of mold release agent is inappropriate, open pores may be formed in a surface of the skin layer when the density of the entire polyurethane foam is reduced. When open pores are formed in the surface of the skin layer, the sound insulating properties of the sound-proofing material are deteriorated.

On the other hand, if a general mold release agent that hardly causes open pore formation is used, coarse cells may be generated at the surface, and the sound insulating properties of the sound-proofing material may be deteriorated.

In order to solve this problem,
it is conceivable to use
   (A) a method of pouring a polyurethane raw material over a surface of a film and integrally molding the film and a polyurethane foam,
   (B) a method in which a paint is sprayed onto a cavity surface of a mold to form a surface layer, and then a polyurethane raw material is poured into the mold to integrally mold the surface layer and a polyurethane foam (so-called "mold coating method"),
and the like.

However, a sound-proofing material including a film has poor shape followability. Therefore, wrinkles may be formed at the surface of the sound-proofing material, and the sealability may be deteriorated. In addition, in the mold coating method, the periphery of the mold is easily stained with the paint. Furthermore, both of these methods increase a cost of the sound-proofing material.

### [CITATIONS LIST]

### [PATENT LITERATURE]

[Patent Literature 1] JP 2013-246182 A (JP 6137783 B)
[Patent Literature 2] JP 2017-142532 A (JP 6352491 B)
[Patent Literature 3] JP 2006-195055 A (JP 4757498 B)

### SUMMARY OF THE INVENTION

An object of the present invention is to provide a sound-proofing material which is composed of a polyurethane foam, is excellent in sound absorbing properties and sound insulating properties, and has a low density.

Another object of the present invention is to provide a method for producing a sound-proofing material capable of producing such a sound-proofing material at a low cost.

In order to solve the above problems, a sound-proofing material according to the present invention includes a polyurethane foam including a double wall structure region composed of a first skin layer/a core layer/a second skin layer.

A density ratio of a first skin layer region A is 1.05 or more,
a density ratio of a second skin layer region A is 1.05 or more, and
an overall (OA) density is less than 130 kg/m³.

A method for producing a sound-proofing material according to the present invention includes:
a first step of preparing a raw material mixture for producing a polyurethane foam, the raw material mixture containing a polyol component, a polyisocyanate component, a catalyst, a foaming agent, and a low molecular weight polyol;
a second step of applying a mold release agent to an inner surface of a mold; and
a third step of injecting the raw material mixture into the mold applied with the mold release agent, and foaming and curing the raw material mixture in the mold to obtain the sound-proofing material according to the present invention.

The mold release agent contains a wax component having two melting peaks and a branched chain structure.

The raw material mixture may further contain a low molecular amine compound.

When a mold is applied with a mold release agent, a raw material mixture for producing a polyurethane foam is injected into the mold, and the raw material mixture is foamed and cured in the mold, the mold release agent suppresses generation of bubbles at the surface of the mold. As a result, a sound-proofing material including a double wall structure region composed of a first skin layer/a core layer/a second skin layer is obtained. In this case, when a low molecular weight polyol, or a low molecular weight polyol and a low molecular amine compound is/are added to the raw material mixture, and a mold release agent containing a wax component having two melting peaks and a branched chain structure is used, a sound-proofing material excellent in sound absorbing properties and sound insulating properties and a low density can be produced at a low cost.

The sound-proofing material according to the present invention exhibits high sound insulating properties despite being lighter than conventional polyurethane sound-proofing materials. This is considered to be because
(A) the addition of the low molecular weight polyol, or the low molecular weight polyol and the low molecular weight amine compound to the raw material mixture increased the density ratio of the first skin layer region A and the density ratio of the second skin region A, and further improved the sound insulating effect obtained by a double wall, and
(B) the use of the mold release agent containing the wax component having two melting peaks and a branched chain structure suppressed formation of open pores in and generation of coarse cells at the skin layer surface, and further improved the sound insulating effect obtained by the double wall.

### BRIEF DESCRIPTION OF THE DRAWINGS

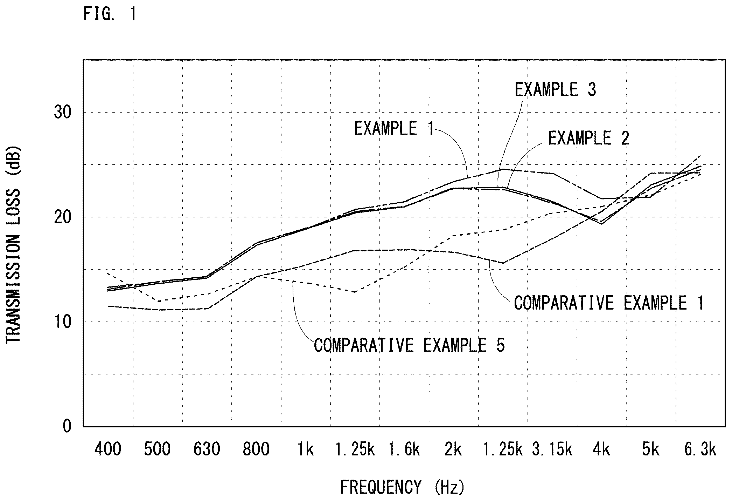

FIG. 1 is a diagram showing measurement results of sound transmission losses of sound-proofing materials obtained in Examples 1 to 3, Comparative Example 1, and Comparative Example 5.

### DETAILED DESCRIPTION OF PREFERRED EMBODIMENTS

Hereinafter, embodiments of the present invention will be described in detail.

### [1. Sound-proofing material]

The sound-proofing material according to the present invention has the following configuration.
(1) The sound-proofing material is composed of a polyurethane foam.
(2) The sound-proofing material includes a double wall structure region composed of a first skin layer/a core layer/a second skin layer in at least a portion thereof.
   A density ratio of a first skin layer region A is 1.05 or more, and
   a density ratio of a second skin layer region A is 1.05 or more.
(3) The sound-proofing material has an overall (OA) density of less than 130 kg/m³.

### [1.1. Material]

The sound-proofing material according to the present invention is composed of a polyurethane foam. The polyurethane foam constituting the sound-proofing material preferably has a three-dimensional crosslinked structure.

Examples of the polyurethane foam having a three-dimensional crosslinked structure include:
(a) those obtained by reacting a raw material mixture containing a polyol having 3 or more functional groups and/or a polyisocyanate having 3 or more functional groups, and
(b) those obtained by reacting a raw material mixture in which both a polyol and a polyisocyanate have 2 functional groups, and the polyisocyanate is excessive, thereby producing a biuret and/or an allophanate in a polymer chain.

The polyurethane foam constituting the sound-proofing material is not particularly limited as long as it satisfies conditions which will be described later.

### [1.2.2 Double wall structure region]

The "double wall structure region" refers to a region in which
(a) two surfaces face each other along a sound propagation direction,
(b) a first skin layer is provided on one surface side,
(c) a second skin layer is provided on the other surface side, and
(d) a core layer is provided between the first skin layer and the second skin layer.

The "skin layer" refers to a region having a higher density than that of an inside (core layer) (that is, a region having a lower foaming ratio than that of the inside). Normally, when the polyurethane raw material is foamed, a skin layer is formed on an outer surface. When a mold surface is applied with a mold release agent in molding a polyurethane foam, the mold release agent suppresses generation of bubbles at the mold surface. As a result, a stronger skin layer can be formed. A thickness of the skin layer can be controlled by producing conditions.

The sound-proofing material may include a double wall structure region in a portion thereof, or may have a double wall structure as a whole.

In a case where either one of the first skin layer and the second skin layer is disposed on a sound source side, when a sound is incident on the skin layer on the sound source side, a part of the sound is reflected (insulated) by the skin layer on the sound source side. The sound transmitted through the skin layer on the sound source side is attenuated (absorbed) when passing through the core layer. Further, a part of the sound transmitted through the core layer is reflected (insulated) by the skin layer disposed on the side opposite to the sound source, and the remaining sound is transmitted through the skin layer. Therefore, the sound-proofing material including the double wall structure region exhibits high sound-proofing properties (sound absorbing properties, sound insulating properties).

### [1.3. Density ratio]

The "density ratio of the first skin layer region A" refers to a ratio (= ρₛ₁/ρ_{c}) of a density (ρₛ₁) of the first skin layer region A to a density (ρ_{c}) of a core layer region A.

The "density ratio of the second skin layer region A" refers to a ratio (= ρₛ₂/ρ_{c}) of a density (ρₛ₂) of the second skin layer region A to the density (ρ_{c}) of the core layer region A.

The "density" refers to a value as measured in accordance with JIS K7222:2005.

The "core layer region A" refers to a region defined when the density is measured, the region not including high density regions of surface layers. Specifically, the "core layer region A" refers to a region of ± t_{A}/2 from a center of the double wall structure region.

The "first skin layer region A" refers to a region defined when the density is measured, the region including a high density region of a surface layer on a first skin layer side. Specifically, the "first skin layer region A" refers to a region from the surface on the first skin layer side to a depth t_{A}.

The "second skin layer region A" refers to a region defined when the density is measured, the region including a high density region of a surface layer on a second skin layer side. Specifically, the "second skin layer region B" refers to a region from the surface on the second skin layer side to the depth t_{A}.

t_{A} is 5.0 mm or t₀ × 0.125 (t₀ is the thickness of the double wall structure region).

The density ratio of the first skin layer region A affects the sound insulating properties of the sound-proofing material. In general, the larger the density ratio of the first skin layer region A, the higher the sound insulating properties. In order to obtain high sound insulating properties, the density ratio of the first skin layer region A needs to be 1.05 or more. The density ratio is preferably 1.08 or more, 1.10 or more, 1.15 or more, or 1.20 or more.

Similarly, the density ratio of the second skin layer region A affects the sound insulating properties of the sound-proofing material. In general, the larger the density ratio of the second skin layer region A, the higher the sound insulating properties. In order to obtain high sound insulating properties, the density ratio of the second skin layer region A needs to be 1.05 or more. The density ratio is preferably 1.08 or more, 1.10 or more, 1.15 or more, or 1.20 or more.

The conditions for the density ratios of the first skin layer region A and the second skin layer region A only need to be satisfied at least:
(A) when the density of each region is measured for a sample having a thickness of 5.0 mm, or
(B) when the density of each region is measured for a sample having a thickness t₀ × 0.125.

When a polyurethane foam is molded using a vertically split mold, the skin layer formed on a lower mold side usually has a better surface state than the skin layer formed on an upper mold side. In addition, since a strong foaming pressure is applied to the raw material on the upper mold side, the density of the skin layer on the upper mold side is usually higher than that of the skin layer on the lower mold side.

On the other hand, when the method according to the present invention is used, not only the surface state of the skin layer on the lower mold side is good, but also the surface state of the skin layer on the upper mold side is good, as compared with those of conventional polyurethane foams. In addition, not only the skin layer on the upper mold side has a high density, but also the skin layer on the lower mold side has a high density, as compared with those of conventional polyurethane foams.

### [1.4. Overall (OA) density]

The "overall (OA) density" refers to a density of the entire sound-proofing material.

The "density" refers to a value as measured in accordance with JIS K7222:2005.

In general, the sound-proofing material has higher sound insulating properties as a mass per unit area thereof increases. However, the sound-proofing material according to the present invention includes the double wall structure region having high density ratios, and thus exhibits high sound insulating properties despite being lightweight (low OA density).

The sound-proofing material according to the present invention has an OA density of less than 130 kg/m³. When the producing conditions are optimized, the OA density is 120 kg/m³ or less, 110 kg/m³ or less, 100 kg/m³ or less, 90 kg/m³ or less, or 80 kg/m³ or less.

### [1.5. Thickness]

In the present invention, the thickness t₀ of the double wall structure region is not particularly limited, and an optimum thickness can be selected according to the purpose. t₀ may be constant regardless of the location, or may vary depending on the location.

However, too small t₀ may deteriorate the sound-proofing properties. Therefore, t₀ is preferably 10 mm or more. t₀ is more preferably 20 mm or more, or 30 mm or more.

### [1.6. Characteristics]

### [1.6.1. Average transmission loss]

The "average transmission loss" refers to an average value of sound transmission losses at frequencies of 400 Hz to 4 kHz.

The "sound transmission loss" refers to a value as measured in accordance with JIS A1441-1:2007.

The sound-proofing material according to the present invention includes the double wall structure region having high density ratios, and thus exhibits high sound insulating properties despite being lightweight. When the producing conditions are optimized, the average transmission loss is 15.0 dB or more. When the producing conditions are further optimized, the average transmission loss is 16.0 dB or more, 17.0 dB or more, or 18.0 dB or more.

### [1.6.2. Air permeability]

The "skin layer region B" refers to a region defined when the air permeability is measured, the region including a high density region of the surface layer. Specifically, the "skin region B" refers to a region up to a depth of 10.0 mm from the surface on the first skin layer side or the surface on the second skin layer side.

The "core layer region B" refers to a region defined when the air permeability is measured, the region not including high density regions of the surface layers. Specifically, the "core layer region B" refers to a region of ± 5.0 mm from the center of the double wall structure region.

The "air permeability" refers to a value as measured in accordance with JIS K6400-7:2012, Method A.

The thickness t₀ of the double wall structure region is not particularly limited, and an optimum thickness can be selected according to the purpose. However, in order to obtain high sound-proofing properties, a difference between the air permeability of the skin layer region B and the air permeability of the core layer region B is preferably large. In order to increase the difference in air permeability, t₀ is preferably 10 mm or more.

An air permeability Qₛ of the skin layer region B mainly affects the sound insulating properties of the sound-proofing material. In general, as Qₛ decreases, higher sound insulating properties can be obtained. In order to obtain high sound insulating properties, Qₛ is preferably 12.0 L/min or less. Qₛ is more preferably 10.0 L/min or less, 8.0 L/min or less, or 6.0 L/min or less.

An air permeability Q_{c} of the core layer region B mainly affects the sound absorbing properties of the sound-proofing material. In general, as Q_{c} increases, higher sound absorbing properties can be obtained. In order to obtain high sound absorbing properties, Q_{c} is preferably 15.0 L/min or more. Q_{c} is more preferably 20.0 L/min or more, 25.0 L/min or more, 30.0 L/min or more, or 35.0 L/min or more.

Note that the condition for the air permeability of the skin layer region B may be satisfied either on the first skin layer side or on the second skin layer side, or may be satisfied on both sides. By using the method which will be described later, a sound-proofing material in which the air permeability of the skin layer region B collected from at least the lower mold side satisfies the above-described condition is obtained.

### [1.6.3. Coefficient of dynamic friction]

The "coefficient of dynamic friction" refers to a value as measured in accordance with JIS K7125.

The sound-proofing material according to the present invention may be mounted by being pushed into a narrow gap. Therefore, too large a coefficient of dynamic friction of the surface of the sound-proofing material may make it difficult to insert the sound-proofing material into the gap. In order to facilitate the insertion of the sound-proofing material, the coefficient of dynamic friction of the surface is preferably as small as possible.

The coefficient of dynamic friction can be mainly controlled by the type of raw material for producing a polyurethane foam (in particular, low molecular weight polyol, and low molecular amine compound to be added as necessary) and the type of mold release agent to be used for molding.

In order to facilitate the insertion of the sound-proofing material, the coefficient of dynamic friction of the surface of the sound-proofing material is preferably 0.9 or less. The coefficient of dynamic friction is more preferably 0.7 or less, or 0.5 or less.

The condition for the coefficient of dynamic friction may be satisfied by either the surface of the first skin layer or the surface of the second skin layer, or may be satisfied by both surfaces. In order to facilitate the insertion of the sound-proofing material into the gap, the condition for the coefficient of dynamic friction is preferably satisfied by both the surface of the first skin layer and the surface of the second skin layer.

### [2. Method for producing sound-proofing material]

The method for producing a sound-proofing material according to the present invention includes:
a first step of preparing a raw material mixture for producing a polyurethane foam, the raw material mixture containing a polyol component, a polyisocyanate component, a catalyst, a foaming agent, and a low molecular weight polyol;
a second step of applying a mold release agent to an inner surface of a mold; and
a third step of injecting the raw material mixture into the mold applied with the mold release agent, and foaming and curing the raw material mixture in the mold to obtain the sound-proofing material according to the present invention.

### [2.1. First step]

First, a raw material mixture for producing a polyurethane foam, the raw material mixture containing a polyol component, a polyisocyanate component, a catalyst, a foaming agent, and a low molecular weight polyol, is prepared (first step).

The raw material mixture may further contain a low molecular amine compound.

The sound-proofing material according to the present invention is preferably a polyurethane foam having a three-dimensional crosslinked structure. Examples of a method for obtaining such a polyurethane foam include:
(a) a method of reacting a raw material mixture containing a polyol having 3 or more functional groups and/or a polyisocyanate having 3 or more functional groups, and
(b) a method of reacting a raw material mixture in which both a polyol and a polyisocyanate have 2 functional groups, and the polyisocyanate is excessive, thereby producing a biuret and/or an allophanate in a polymer chain.

### [2.1.1. Polyol component]

The "polyol component" refers to one of main raw materials for forming a polyurethane main chain, which is one polyol or a mixture containing two or more polyols.

The "polyol" refers to a compound having two or more hydroxyl groups in one molecule. As the polyol (main polyol) for forming the polyurethane main chain, a polyol having a molecular weight of 500 or more is usually used. The type of polyol is not particularly limited as long as a polyurethane foam satisfying the above-described conditions can be manufactured.

Examples of the main polyol include:
(a) those obtained by addition polymerization of ethylene oxide or propylene oxide with a polyhydric alcohol as an initiator (so-called "polyether polyols"),
(b) those obtained by dehydration condensation of a dibasic acid (for example, dicarboxylic acid) and a polyhydric alcohol (so-called "polyester polyols"), and
(c) those in which polymer fine particles obtained by polymerizing a vinyl monomer (for example, acrylonitrile and/or styrene) are dispersed in a polyether polyol (so-called "polymer polyols").

In the present invention, any one of these polyols may be used, or two or more thereof may be used.

In particular, the polyol component preferably contains one or more polyols having 2 or more and 4 or less functional groups and a weight average molecular weight of 1000 or more and 10000 or less.

The polyol component may contain a polyol having a molecular weight of less than 1000 (for example, a polyol having a molecular weight of about 600) as long as the weight average molecular weight is within a predetermined range.

Too small a weight average molecular weight of the polyol may excessively increase hardness of the polyurethane foam. Therefore, the weight average molecular weight of the polyol is preferably 1000 or more. The weight average molecular weight is more preferably 1500 or more, or 2000 or more.

On the other hand, too large a weight average molecular weight may excessively increase the viscosity of the raw material mixture. As a result, high pump capacity is required in a manufacturing process. In addition, mixability and fluidity of the raw material mixture may be deteriorated. Therefore, the weight average molecular weight of the polyol is preferably 10000 or less. The weight average molecular weight is more preferably 9000 or less, or 8000 or less.

### [2.1.2. Polyisocyanate component]

The "polyisocyanate component" refers to another one of the main raw materials for forming the polyurethane main chain, which is one polyisocyanate or a mixture of two or more polyisocyanates.

The term "polyisocyanate" refers to a compound having two or more isocyanate groups in one molecule. The type of polyisocyanate is not particularly limited as long as a polyurethane foam satisfying the above-described conditions can be manufactured.

Examples of the polyisocyanate include:
(a) an aromatic isocyanate compound, an aliphatic isocyanate compound, or an alicyclic isocyanate compound, and
(b) a modified product of the above compound.

Examples of the aromatic isocyanate compound include:
diphenylmethane diisocyanate (MDI),
crude diphenylmethane diisocyanate, tolylene diisocyanate (TDI),
naphthalene diisocyanate (NDI),
p-phenylene diisocyanate (PPDI), xylene diisocyanate (XDI),
tetramethylxylene diisocyanate (TMXDI), and
tolidine diisocyanate (TODI).

Examples of the aliphatic isocyanate compound include:
hexamethylene diisocyanate (HDI), lysine diisocyanate (LDI), and
lysine triisocyanate (LTI).

Examples of the alicyclic isocyanate compound include:
isophorone diisocyanate (IPDI),
cyclohexyl diisocyanate (CHDI),
hydrogenated XDI (H₆XDI), and
hydrogenated MDI (H₁₂MDI).

Examples of the modified isocyanate compound include a urethane-modified product, a dimer, a trimer, a carbodiimide-modified product, an allophanate-modified product, a biuret-modified product, a urea-modified product, an isocyanurate-modified product, an oxazolidone-modified product, and an isocyanate group-terminated prepolymer.

### [2.1.3. Catalyst]

The "catalyst" refers to a catalyst that promotes a resinification reaction, a catalyst that promotes a foaming reaction, or a catalyst that promotes both a resinification reaction and a foaming reaction.

When a chemical foaming agent (water) is not used as the foaming agent, it is not necessary to add a catalyst that promotes only a foaming reaction.

Examples of the catalyst include an amine-based catalyst and a metal catalyst. The amine-based catalyst is a catalyst that promotes both a resinification reaction and a foaming reaction. The metal catalyst is a catalyst that promotes a resinification reaction. The raw material mixture may contain any one of these catalysts, or may contain two or more thereof.

Examples of the amine-based catalyst include:
N,N-dimethylcyclohexylamine, N,N-dimethylbenzylamine,
N,N-dimethylaminoethanol,
N,N',N'-trimethylaminoethylpiperazine, and
triethylenediamine.

Examples of the metal catalyst include:
(a) tin catalysts such as stannous octoate and dibutyltin dilaurate,
(b) mercury catalysts such as phenylmercuric propionate, and
(c) lead catalysts such as lead octenate.

### [2.1.4. Foaming agent]

The "foaming agent" refers to an additive for producing cells in a polyurethane.

In the present invention, the foaming agent may be either
(a) a physical foaming agent that generates a gas by pressure reduction or heating, or
(b) a chemical foaming agent that generates a gas by thermal decomposition or chemical reaction.

Examples of the physical foaming agent include
(a) hydrocarbons such as cyclopentane, isopentane, and normal pentane, and
(b) halogen-based compounds such as methylene chloride, trichlorofluoromethane, dichlorodifluoromethane, nonafluorobutyl methyl ether, pentafluoroethyl methyl ether, and pentafluoroisopropyl methyl ether.

Examples of the chemical foaming agent include:
(a) water that reacts with an isocyanate group to generate CO₂, and
(b) azodicarbonamide that generates nitrogen, carbon monoxide, carbon dioxide, or ammonia gas by thermal decomposition.

The raw material mixture may contain any one of these foaming agents, or may contain two or more thereof.

Among them, the foaming agent is preferably water. When water is used as the foaming agent, CO₂ gas generated by reaction between water and an isocyanate group promotes foaming. In addition, the reaction between water and an isocyanate group forms a urea bond or a urea bond and promotes resinification.

### [2.1.5. Low molecular weight polyol]

The "low molecular weight polyol" refers to a polyol different from the polyol component and having a molecular weight of less than 500.

A number of functional groups of the low molecular weight polyol is preferably 2 or more and 6 or less. The number of functional groups is preferably 2 or more and 4 or less, and more preferably 2 or more and 3 or less.

A molecular weight of the low molecular weight polyol is preferably 300 or less. The molecular weight is preferably 200 or less, and more preferably 150 or less.

A hydroxyl value of the low molecular weight polyol is preferably 400 mgKOH/g or more. The hydroxyl value is preferably 600 mgKOH/g or more, 800 mgKOH/g or more, or 1000 mgKOH/g or more.

Examples of the low molecular weight polyol include:
(a) ethylene glycol (EG), diethylene glycol (DEG), propylene glycol (PG), dipropylene glycol (DPG), 1,4-butanediol (1,4-BG), 1,3-butanediol, 1,5-pentanediol, neopentyl glycol, 1,6-hexanediol, 1,10-decanediol, and 1,12-dodecanediol, and
(b) trimethylolpropane, glycerin, sorbitol, and quadrol. The raw material mixture may contain any one of these low molecular weight polyols, or may contain two or more thereof.

The low molecular weight polyol functions as a chain extender. When there is a branch in the molecular structure of the low molecular weight polyol, or when the raw material mixture contains a component having 3 or more functional groups, the low molecular weight polyol also functions as a crosslinking agent that crosslinks polymer chains.

When a relatively large amount of low molecular weight polyol is added to the raw material mixture, a polyurethane foam having a high density ratio and a low density can be manufactured. In particular, the density of the skin layer on the lower mold side is higher than those of conventional polyurethane foams. This is considered to be because, by adding a large amount of low molecular weight polyol to the raw material mixture, the resinification reaction starts from an initial stage of the reaction, and growth of bubbles in a region in the vicinity of the lower mold is suppressed by the resinification.

### [2.1.6. Low molecular amine compound]

The phrase "low molecular amine compound" refers to:
(a) a compound (alkanolamine) having a hydroxy group (-OH) and an amino group (-NH₂, -NHR, or -NRR') in an alkane skeleton, or
(b) a compound having two or more amino groups (-NH₂, -NHR, or -NRR').

A number of functional groups of the low molecular amine compound is preferably 2 or more and 6 or less. The number of functional groups is preferably 2 or more and 4 or less, and more preferably 2 or more and 3 or less.

A molecular weight of the low molecular amine compound is preferably 200 or less. The molecular weight is more preferably 150 or less.

Examples of the alkanolamine include monoethanolamine, diethanolamine, triethanolamine, isopropanolamine, 2-(2-aminoethylamino) ethanol, 2-amino-2-hydroxymethyl-1,3-propanediol, ethylaminoethanol, and aminobutanol.

Examples of the compound having two or more amino groups include ethylenediamine.

The raw material mixture may contain any one of these low molecular amine compounds, or may contain two or more thereof.

The low molecular amine compound functions as a chain extender or an amine catalyst. When there is a branch in the molecular structure of the low molecular amine compound, or when the raw material mixture contains a component having 3 or more functional groups, the low molecular amine compound also functions as a crosslinking agent that crosslinks polymer chains.

The low molecular amine compound is not necessarily required. However, when the low molecular amine compound is further added to the raw material mixture, the resinification reaction is further promoted, so that a polyurethane foam having a high density ratio and a low density can be more easily manufactured.

### [2.1.6. Other components]

The raw material mixture for producing a polyurethane foam may contain other components in addition to the above components. Examples of the other components include a foam stabilizer, a foam breaker, a flame retardant, and a colorant. The raw material mixture may contain any one of these other components, or may contain two or more thereof.

### [A. Foam stabilizer]

The "foam stabilizer" refers to an additive having an action of uniformizing the size and distribution of cells.

The addition of the foam stabilizer to the raw material mixture can provide a sound-proofing material having cells uniform in size and distribution. Examples of the foam stabilizer include silicone-based foam stabilizers, fluorine-containing compound-based foam stabilizers, and known surfactants.

### [B. Foam breaker]

The "foam breaker" refers to an additive having an action of communicating closed cells, and is also called "cell opener".

In a case where the raw material mixture is foamed, when there are closed cells in the polyurethane foam, the cells shrink in a cooling process, and the sound-proofing material also shrinks accordingly. On the other hand, when a foam breaker is added to the raw material mixture, cells communicate with each other to reduce closed cells, and shrinkage of the sound-proofing material in the cooling process can be suppressed. Examples of the foam breaker include a hydrocarbon-based foam breaker, an ester-based foam breaker, a silicone-based foam breaker, and a polyol-based foam breaker.

Examples of the hydrocarbon-based foam breaker include oils such as polybutene.

Examples of the ester-based foam breaker include dimer acid diesters.

Examples of the silicone-based foam breaker include cyclopentasiloxane.

Examples of the polyol-based foam breaker include polyether polyols having an EO rate of 50% or more (preferably 60 to 100%).

### [C. Flame retardant]

The "flame retardant" refers to an additive having an action of making the sound-proofing material flame-retardant.

When a flame retardant is added to the raw material mixture, the sound-proofing material can be made flame-retardant. Examples of the flame retardant include:
(a) powder flame retardants such as phosphorus-based flame retardants, and ammonium polyphosphate, and
(b) liquid flame retardants such as phosphoric acid ester-based flame retardants.

### [D. Colorant]

The "colorant" refers to an additive having an action of coloring the sound-proofing material into a desired color.

When a colorant is added to the raw material mixture, the sound-proofing material can be colored to a desired color. Examples of the colorant include carbon black.

### [2.1.7. Content of each component]

### [A. Isocyanate index]

The "isocyanate index" refers to a value obtained by multiplying a ratio of an equivalent of an isocyanate group of the polyisocyanate in the raw material mixture to an equivalent of an active hydrogen group in the raw material mixture by 100.

Too small an isocyanate index may excessively decrease strength of the polyurethane foam, and may deteriorate durability. In addition, gas is less likely to escape from the cells in the cooling process after foaming, and the sound-proofing material may shrink. Therefore, the isocyanate index is preferably 80 or more. The isocyanate index is more preferably 85 or more, or 90 or more.

On the other hand, too large an isocyanate index may excessively increase the hardness of the polyurethane foam, and may be less likely to deform the sound-proofing material according to the shape of a mating surface. Therefore, the isocyanate index is preferably 120 or less. The isocyanate index is more preferably 115 or less, or 110 or less.

### [B. Content of catalyst]

The "content of the catalyst" refers to a weight of the catalyst (parts per hundred parts of polyol, pphp) when a weight of the polyol component is 100.

In general, the reaction proceeds in a shorter time as the content of the catalyst increases. In order to obtain such an effect, the content of the catalyst is preferably **0.1** pphp or more. The content is more preferably 0.5 pphp or more, or 1.0 pphp or more.

On the other hand, an excessive content of the catalyst may excessively increase the hardness of the polyurethane foam. Therefore, the content of the catalyst is preferably 8.0 pphp or less. The content is more preferably 6.0 pphp or less, or 4.0 pphp or less.

### [C. Content of foaming agent]

The "content of the foaming agent" refers to a weight (pphp) of the foaming agent when the weight of the polyol component is 100.

As the content of the foaming agent, it is preferable to select an optimum content according to the type of foaming agent.

For example, when the foaming agent is water, in general, as the content of water increases, a sound-proofing material having a lower OA density is obtained. In order to obtain a low-density sound-proofing material, the content of water is preferably 1.0 pphp or more. The content is more preferably 2.0 pphp or more, or 3.0 pphp or more.

On the other hand, an excessive content of water may excessively decrease the OA density, and may decrease the strength of the sound-proofing material. Therefore, the content of water is preferably 10.0 pphp or less. The content is more preferably 8.0 pphp or less, or 6.0 pphp or less.

### [D. Content of low molecular weight polyol]

The "content of low molecular weight polyol" refers to a weight (pphp) of the low molecular weight polyol when the weight of the polyol component is 100.

In general, as the content of the low molecular weight polyol increases, a skin layer region having a high density ratio is easily formed on the surface. In order to obtain such an effect, the content of the low molecular weight polyol is preferably 1.5 pphp or more. The content is more preferably 2.0 pphp or more, or 3.0 pphp or more.

On the other hand, the low molecular weight polyol does not have an amino group, and thus is less likely to excessively increase the hardness of the polyurethane foam as compared with the low molecular amine compound. However, an excessive content of the low molecular weight polyol may excessively increase the hardness of the polyurethane foam. Therefore, the content of the low molecular weight polyol is preferably 10.0 pphp or less. The content is more preferably 7.0 pphp or less.

### [E. Content of low molecular amine compound]

The "content of the low molecular amine compound" refers to a weight (pphp) of the low molecular amine compound when the weight of the polyol component is 100.

In the present invention, the content of the low molecular amine compound may be zero. In general, as the content of the low molecular amine compound increases, a skin layer region having a high density ratio is easily formed on the surface. In order to obtain such an effect, the content of the low molecular amine compound is preferably more than 0 pphp. The content is more preferably 0.4 pphp or more, or 0.8 pphp or more.

On the other hand, the amino group of the low molecular amine compound also functions as a catalyst for a urethanization reaction. Therefore, an excessive content of the low molecular amine compound may excessively increase the hardness of the polyurethane foam. Too hard the polyurethane foam may make it difficult to insert the sound-proofing material into a gap. Therefore, the content of the low molecular amine compound is preferably 2.0 pphp or less. The content is more preferably 1.6 pphp or less, or 1.2 pphp or less.

### [F. Content of other components]

The content of the other components is not particularly limited, and an optimum content can be selected according to the purpose.

### [2.2. Second step]

Next, a mold release agent is applied to an inner surface of a mold (second step).

A shape of the mold is not particularly limited, and an optimum shape can be selected according to the purpose. As the mold, a split mold that can be split vertically is usually used. In addition, a heating means such as an electric heater or a heat medium circulation pipe is usually embedded in the mold, and the mold can be maintained at a predetermined temperature.

The type of mold release agent affects the air permeability of the skin layer region. In the present invention, a mold release agent containing a wax component having two melting peaks and a branched chain structure is used. This point differs from conventional ones.

In particular, the mold release agent preferably contains:
(a) a first wax component having a first melting peak at 70°C or higher and 90°C or lower and a branched chain structure, and
(b) a second wax component having a second melting peak at 100°C or higher and 130°C or lower and a branched chain structure.

The first wax component preferably has a weight average molecular weight of 600 or less.

The second wax component preferably has a weight average molecular weight of 1000 or more.

When a polyurethane foam is molded, the mold release agent has not only an action of simply facilitating removal of a molded article from the mold but also an action of suppressing generation of bubbles in the vicinity of the surface of the mold. Therefore, when the mold release agent is applied to the surface of the mold during molding, a high-density skin layer can be formed on the surface of the molded article. However, an inappropriate type of mold release agent may result in formation of open pores on the surface of the skin layer, generation of coarse cells, or reduction in density of the skin layer on the lower mold side.

On the other hand, the use of a mold release agent satisfying the above conditions can form a skin layer having less open pores and coarse cells at the surface. In addition, the density of not only the skin layer on the upper mold side but also the skin layer on the lower mold side increases.

A method for applying the mold release agent is not particularly limited, and an optimum method can be selected according to the purpose. Examples of the applying method include brush coating and spray application.

In addition, an applied amount of the mold release agent is not particularly limited, and an optimum amount can be selected according to the purpose. The applied amount of the mold release agent is usually about 10 mg/m² to 100 g/m².

### [2.3. Third step]

Next, the raw material mixture is injected into the mold applied with the mold release agent, and the raw material mixture is foamed and cured in the mold (third step). Thus, the sound-proofing material according to the present invention is obtained.

The raw material mixture is injected into the mold heated to a predetermined temperature. In this case, too low a temperature of the mold may require a long time for thermal curing (curing) of the raw material mixture, and may deteriorate productivity. In addition, the raw material mixture may be insufficiently foamed, and the cavity of the mold may not be completely filled with the polyurethane foam. Therefore, the temperature of the mold is preferably 40°C or higher. The temperature of the mold is more preferably 50°C or higher.

On the other hand, too high a temperature of the mold may excessively increase reactivity of the raw material mixture, and may deteriorate flowability of the raw material mixture. In addition, a part of the mold release agent may be excessively molten to roughen the surface of the molded article. Therefore, the temperature of the mold is preferably 80°C or lower. The temperature of the mold is more preferably 70°C or lower.

After a lapse of a predetermined time, the sound-proofing material is taken out from the mold.

### [3. Effects]

When a mold is applied with a mold release agent, a raw material mixture for producing a polyurethane foam is injected into the mold, and the raw material mixture is foamed and cured in the mold, the mold release agent suppresses generation of bubbles at the surface of the mold. As a result, a sound-proofing material including a double wall structure region composed of a first skin layer/a core layer/a second skin layer is obtained. In this case, when a low molecular weight polyol, or a low molecular weight polyol and a low molecular amine compound is/are added to the raw material mixture, and a mold release agent containing a wax component having two melting peaks and a branched chain structure is used, a sound-proofing material excellent in sound absorbing properties and sound insulating properties and a low density can be produced at a low cost.

The sound-proofing material according to the present invention exhibits high sound insulating properties despite being lighter than conventional polyurethane sound-proofing materials. This is considered to be because
(A) the addition of the low molecular weight polyol, or the low molecular weight polyol and the low molecular amine compound to the raw material mixture increased the density ratio of the first skin layer region A and the density ratio of the second skin region A, and further improved the sound insulating effect obtained by a double wall, and
(B) the use of the mold release agent containing the wax component having two melting peaks and a branched chain structure suppressed formation of open pores in and generation of coarse cells at the skin layer surface, and further improved the sound insulating effect obtained by the double wall.

### [Examples]

### (Examples 1 to 16 and Comparative Examples 1 to 5)

### [1. Preparation of sample]

### [1.1. Raw material]

As the polyol, the following polyols were used.
(1) Polyol A: polyether polyol, molecular weight: 7000, number of functional groups: 3, EO content: 14%, product name: KC-737, manufactured by Sanyo Chemical Industries, Ltd.
(2) Polyol B: polyether polyol, molecular weight: 5000, number of functional groups: 3, EO content: 14%, product name: FA-703, manufactured by Sanyo Chemical Industries, Ltd.
(3) Polyol C: polymer polyol, molecular weight: 5000, number of functional groups: 3, product name: FA-728R, manufactured by Sanyo Chemical Industries, Ltd.

As the catalyst, the following catalysts were used.
(1) Catalyst A: amine catalyst, product name: DABCO BL-11, manufactured by Evonik Industries AG.
(2) Catalyst B: amine catalyst, product name: DABCO 33LSI, manufactured by Evonik Industries AG.
(3) Catalyst C: amine catalyst, product name: TOYOCAT D-60, manufactured by Tosoh Corporation

As the crosslinking agent (alkanolamine or low molecular weight polyol), the following crosslinking agents were used.
(1) Crosslinking agent A: diethanolamine, molecular weight: 105, number of functional groups: 2, hydroxyl value: 1603 mgKOH/g
(2) Crosslinking agent B: ethylene glycol (EG), molecular weight: 62, number of functional groups: 2, hydroxyl value: 1810 mgKOH/g
(3) Crosslinking agent C: diethylene glycol (DEG), molecular weight: 106, number of functional groups: 2, hydroxyl value: 1059 mgKOH/g
(4) Crosslinking agent D: 1,4-butanediol, molecular weight: 90, number of functional groups: 2, hydroxyl value: 1245 mgKOH/g

The following materials were used as the foam stabilizer, the foam breaker, and the foaming agent, respectively.
(1) Foam stabilizer: silicone foam stabilizer, product name: B8738LF2, manufactured by Evonik Industries AG.
(2) Foam breaker: polyether polyol, molecular weight: 4800, number of functional groups: 3, PO/EO = 30/70 (EO rate: 70%), product name: CP1421, manufactured by The Dow Chemical Company
(3) Foaming agent: water

As the polyisocyanate, the following polyisocyanates were used.
(1) Polyisocyanate A: polymeric MDI, NCO%: 31.5%, product name: 600B, manufactured by BASF INOAC Polyurethanes Ltd.
(2) Polyisocyanate B: polymeric MDI, NCO%: 27.0%, product name: M249, manufactured by Sumika Covestro Urethane Co., Ltd.
(3) Polyisocyanate C: 50/50 mixture of TDI-80 and polymeric MDI, NCO%: 31.5%, product name: TM50, manufactured by Mitsui Chemicals, Inc.

As the mold release agent, the following mold release agents were used.
(1) Mold release agent A: branched wax-based mold release agent, first melting peak: 81.0°C, second melting peak: 110.2°C, product name: FRX-C8, manufactured by NEOS COMPANY LIMITED
(2) Mold release agent B: branched wax-based mold release agent, melting peak: 106.9°C, product name: M975, manufactured by Chukyo Yushi Co., Ltd.
(3) Mold release agent C: linear wax-based mold release agent, first melting peak: 93.2°C, second melting peak: 108.3°C, product name: T-626, manufactured by Chukyo Yushi Co., Ltd.

Table 1 shows the compositions of the raw materials used. Table 1 also shows the OA density of each sample and the type of mold release agent used during molding.

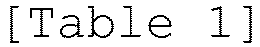

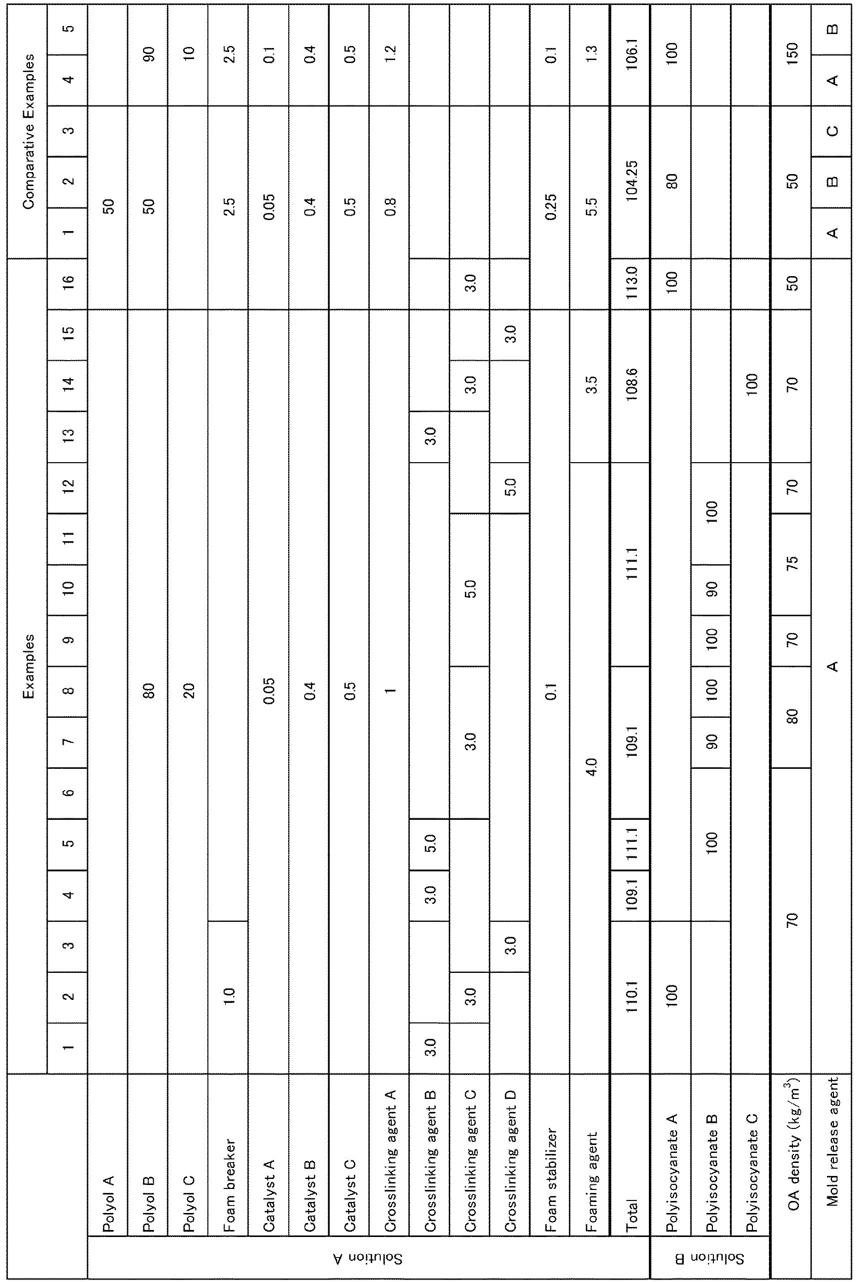

### [1.2. Molding]

As a foam molding die,
(a) a mold divided into an upper mold and a lower mold, the mold having an inner surface shape of a rectangular parallelepiped, and inner surface dimensions of 500 × 500 × t 20 mm (inner volume of the mold: 5000 cm³) and
(b) a mold divided into an upper mold and a lower mold, the mold having an inner surface shape of a rectangular parallelepiped and inner surface dimensions of 500 × 250 × t 40 mm (inner volume of the mold: 5000 cm³)
were used.

The mold release agent was applied to the inner surface of the mold by spraying. The applied amount of the mold release agent was about 25 g/m². A predetermined amount of the raw material mixture was injected into the mold maintained at 60°C to foam and cure the raw material mixture in the mold. After a lapse of a predetermined time, the resulting product was demolded to obtain a polyurethane foam.

### [2. Test method]

### [2.1. OA density]

As the sample for OA density measurement, a polyurethane foam of 500 × 250 × t 40 mm was used. The OA density of the sample was measured in accordance with JIS K7222:2005.

### [2.2. Upper mold side surface layer density, core density, and lower mold side surface layer density]

The polyurethane foam of 500 × 250 × t 40 mm was cut into a rectangular parallelepiped of 51 mm square × t 40 mm. Next, the rectangular parallelepiped was sliced in parallel with upper and lower surfaces of the rectangular parallelepiped, and a sheet of 51 mm square × t 5 mm was obtained from each of an upper mold side surface layer region, a central region, and a lower mold side surface layer region of the rectangular parallelepiped.

These sheets were used to measure:
(A) an upper mold side surface layer density (density of the first skin layer region A) ρₛ₁,
(B) a core density (density of the core layer region A) ρ_{c}, and
(C) a lower mold side surface layer density (density of the second skin layer region A) ρₛ₂,
in accordance with JIS K7222:2005.

Further, the obtained density was used to calculate:
(A) an upper mold side surface layer density ratio (density ratio of the first skin layer A) ρₛ₁/ρ_{c}, and
(B) a lower mold side surface layer density ratio (density ratio of the second skin layer A) ρₛ₂/ρ_{c}.

### [2.3. Air permeability]

The polyurethane foam of 500 × 250 × t 40 was cut into a rectangular parallelepiped of 51 mm square × t 40 mm. Next, the rectangular parallelepiped was sliced in parallel with upper and lower surfaces of the rectangular parallelepiped, and a sheet of 51 mm square × t 10 mm was obtained from each of the central region and the lower mold side surface layer region of the rectangular parallelepiped.

These sheets were used to measure
(A) an air permeability of the inner core layer (air permeability of a core layer region B) Q_{c}, and
(B) an air permeability of a surface layer skin (air permeability of the skin layer region B) Qₛ,
in accordance with JIS K6400-7:2012, Method A.

### [2.4. Sound insulating properties]

A 400 mm × 400 mm opening was formed in a center of a 500 × 500 × t 20 mm polyurethane foam. This was used to evaluate the sound insulating properties in accordance with JIS A1441-1:2007. A sound transmission loss was measured in a 1/3 octave band, and an average of sound transmission losses at frequencies of 400 Hz to 4 kHz (average transmission loss) was determined.

### [2.5. Coefficient of dynamic friction]

The polyurethane foam of 500 × 250 × t 40 mm was cut into a rectangular parallelepiped of 63 mm square × t 40 mm. Next, the rectangular parallelepiped was sliced in parallel with upper and lower surfaces of the rectangular parallelepiped, and a sheet of 63 mm square × t 10 mm was obtained from the lower mold side surface layer region of the rectangular parallelepiped. This sheet was used to measure a coefficient of dynamic friction in accordance with JIS K7125.

### [3. Results]

The results are shown in Table 2. FIG. 1 shows measurement results of sound transmission losses of sound-proofing materials obtained in Examples 1 to 3, Comparative Example 1, and Comparative Example 5. The following matters are seen from Table 2 and FIG. 1.

In Table 2, regarding the density ratios (ρₛ₁/ρ_{c} and ρₛ₂/ρ_{c}), "⊚" represents that the density ratio is 1.10 or more, "o" represents that the density ratio is 1.08 or more and less than 1.10, "△" represents that the density ratio is 1.05 or more and less than 1.08, and "×" represents that the density ratio is less than 1.05.

Regarding the air permeability (Qₛ) of the surface layer skin, "⊚" represents that the air permeability is 4.0 L/min or less, "∘" represents that the air permeability is more than 4.0 L/min and 8.0 L/min or less, "△" represents that the air permeability is more than 8.0 L/min and 12.0 L/min or less, and "×" represents that the air permeability is more than 12.0 L/min.

Regarding the difference (ΔQ = Q_{c} - Qₛ) in air permeability between the surface layer and the inner core layer, "⊚" represents that the difference in air permeability is 20.0 L/min or more, "∘" represents that the difference in air permeability is 15.0 L/min or more and less than 20.0 L/min, and "△" represents that the difference in air permeability is less than 15.0 L/min.

Regarding the sound insulating properties, "⊚" represents that the average transmission loss is 16.0 dB or more, "∘" represents that the average transmission loss is 12.0 dB or more and less than 16.0 dB, "△" represents that the average transmission loss is 8.0 dB or more and less than 12.0 dB, and "×" represents that the average transmission loss is less than 8.0 dB.

(1) Comparative Example 1 had an average transmission loss of 14.3 dB. Comparative Example 1 had a lower mold side surface layer density ratio ρₛ₂/ρ_{c} of 1.04. This is considered to be because the raw material mixture does not contain any low molecular weight polyol.
(2) Comparative Example 2 had an average transmission loss of 10.9 dB. Comparative Example 2 had an air permeability Qₛ of the surface skin layer increased to 26.9 L/min. This is considered to be because the raw material mixture did not contain any low molecular weight polyol and the mold release agent was inappropriate.
(3) Comparative Example 3 had an average transmission loss of 7.5 dB. Comparative Example 3 had a lower mold side surface layer density ratio ρₛ₂/ρ_{c} of 1.04. Further, Comparative Example 3 had an air permeability Qₛ of the surface skin layer increased to 14.7 L/min. This is considered to be because the raw material mixture did not contain any low molecular weight polyol and the mold release agent was inappropriate.
(4) Comparative Example 4 had an average transmission loss of 20.9 dB, and exhibited good sound insulating properties. However, the OA density of Comparative Example 4 increased to 150 kg/m³. This is considered to be because the raw material mixture does not contain any low molecular weight polyol and the amount of diethanolamine is relatively excessive.
(5) Comparative Example 5 had an average transmission loss of 15.8 dB, and exhibited good sound insulating properties. However, the OA density of Comparative Example 5 increased to 150 kg/m³. Comparative Example 5 had a lower mold side surface layer density ratio ρₛ₂/ρ_{c} of 1.03. This is considered to be because the raw material mixture did not contain any low molecular weight polyol, the amount of diethanolamine was relatively excessive, and the mold release agent was inappropriate.
(6) All of Examples 1 to 16 had an OA density of 80 kg/m³ or less and an average transmission loss of 16.0 dB or more. This is considered to be because the raw material mixtures contain a relatively large amount of low molecular weight polyol, and an appropriate mold release agent was used.

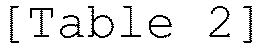

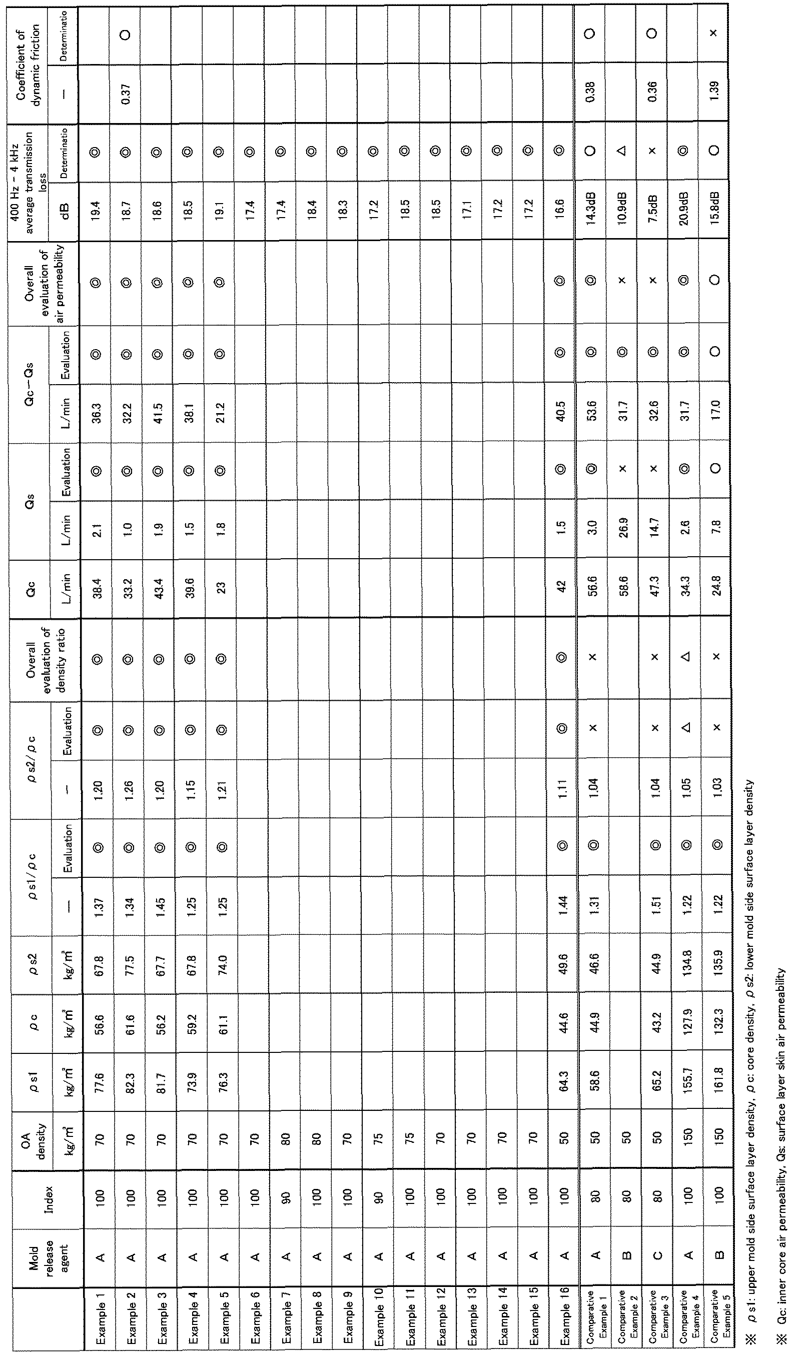

Although the embodiments of the present invention have been described in detail above, the present invention is not limited to the above embodiments at all, and various modifications can be made without departing from the gist of the present invention.

### INDUSTRIAL APPLICABILITY

The sound-proofing material according to the present invention can be used as
(a) a sound-proofing material to be inserted into a gap around a fender, an instrument panel, a cowl, a dash silencer, a floor silencer, or the like of an automobile,
(b) a sound-proofing material covering the periphery of a noise component such as a motor or a compressor,
and the like.

## Claims

1. A sound-proofing material comprising a polyurethane foam including a double wall structure region composed of a first skin layer/a core layer/a second skin layer, wherein
a density ratio of a first skin layer region A is 1.05 or more,
a density ratio of a second skin layer region A is 1.05 or more, and
an overall (OA) density is less than 130 kg/m³,
where
the "density ratio of a first skin layer region A" refers to a ratio (= ρₛ₁/ρ_{c}) of a density (ρₛ₁) of the first skin layer region A to a density (ρ_{c}) of a core layer region A,
the "density ratio of a second skin layer region A" refers to a ratio (= ρₛ₂/ρ_{c}) of a density (ρₛ₂) of the second skin layer region A to the density (ρ_{c}) of the core layer region A,
the "core layer region A" refers to a region of ± t_{A}/2 from a center of the double wall structure region,
the "first skin layer region A" refers to a region from a surface on a side of the first skin layer of the double wall structure region to a depth t_{A},
the "second skin layer region B" refers to a region from a surface on a side of the second skin layer of the double wall structure region to the depth t_{A}, and
t_{A} is 5.0 mm or t₀ × 0.125 (t₀ is a thickness of the double wall structure region).

2. The sound-proofing material according to claim 1, wherein an average transmission loss is 15.0 dB or more,
where
the "average transmission loss" refers to an average value of sound transmission losses at frequencies of 400 Hz to 4 kHz, and
the "sound transmission loss" refers to a value as measured in accordance with JIS A1441-1:2007.

3. The sound-proofing material according to claim 1, wherein an air permeability of a skin layer region B is 12.0 L/min or less,
where
the "skin layer region B" refers to a region up to a depth of 10.0 mm from the surface on the side of the first skin layer or the surface on the side of the second skin layer, and
the "air permeability" refers to a value as measured in accordance with JIS K6400-7:2012, Method A.

4. A method for producing a sound-proofing material, comprising:
a first step of preparing a raw material mixture for producing a polyurethane foam, the raw material mixture comprising a polyol component, a polyisocyanate component, a catalyst, a foaming agent, and a low molecular weight polyol;
a second step of applying a mold release agent to an inner surface of a mold; and
a third step of injecting the raw material mixture into the mold applied with the mold release agent, and foaming and curing the raw material mixture in the mold to obtain the sound-proofing material according to claim 1,
wherein
the mold release agent comprises a wax component having two melting peaks and a branched chain structure,
where the "low molecular weight polyol" refers to a polyol different from the polyol component and having a molecular weight of less than 500.

5. The method for producing a sound-proofing material according to claim 4, wherein the raw material mixture further comprises a low molecular amine compound.
